# EUROPEAN PATENT SPECIFICATION

(11) **EP 2 526 318 B1**
(45) Date of publication and mention of the grant of the patent: **25.12.2019**
(21) Application number: 10715530.1
(22) Date of filing: 20.04.2010
(51) Int. Cl.: F16D 69/02

(54) **COPPER-FREE FRICTION MATERIAL FOR BRAKE PADS**
KUPFERFREIES REIBUNGSMATERIAL FÜR BREMSKLÖTZE
MATIÈRE DE FRICTION SANS CUIVRE POUR GARNITURES DE FREIN

(43) Date of publication of application: 28.11.2012
(73) Proprietor: Federal-Mogul Friction Products GmbH, 65520 Bad Camberg (DE)
(72) Inventor: CHEN, Hao, 56410 Montabaur (DE); PAUL, Hans-Günther, 56595 Horhausen (DE)
(74) Representative: Becker Kurig Straus
(86) International application number: PCT/EP2010/055166
(87) International publication number: WO 2011/131227

(56) References cited:
- US-A1- 2005 004 258
- US-A1- 2010 084 232
- US-A1- 2010 084 233

## Description

### FIELD OF THE INVENTION

The present invention relates to a low-steel friction material and in particular to a friction material for a disc brake pad to be used for disc brakes of vehicles. The friction material is formed without any copper-based materials while maintaining the excellent frictional performance across a wide range of temperatures and high mechanical strength of low-steel friction materials containing copper.

### BACKGROUND OF THE INVENTION

Traditionally, friction materials such as brake pads were made using an asbestos-based friction material. As certain negative factors associated with the use of asbestos became known, many manufacturers switched to non-asbestos-based friction materials. For disc brake pads, steel fiber is also used into friction material to improve the matrix strength.

Copper in low-steel friction materials provides many useful properties and performance characteristics like increased friction coefficient at high temperatures and excellent heat transfer properties. In addition, copper provides an improvement of the longevity of the friction material and reduces brake dust.

While copper and copper alloys provide many positive properties for use in low-steel disc brake pads, it is advantageous to limit the use of copper in friction material for economic reasons. Copper is among the most important industrial metals. It is used in electrical power cables, data cables, electrical equipment, automobile radiators, cooling and refrigeration tubing, heat exchangers etc. Since copper is a finite resource, the price of copper fluctuates dramatically depending on the copper consume demand based on the economic condition.

It is also advantageous to limit the emission of copper from friction material into the environment. Copper is toxic to many aquatic organisms in both marine and freshwater environments, e.g. impairs the sensory systems of salmon, reducing their ability to elude predators and hindering their return to spawning streams. Potentially harmful impacts of copper leaking into aquatic environments have been well documented, as in the case of San Francisco Bay area water studies.

US 2010/084233 A1 discloses a substantially copper-free and titanate-free friction material for a brake comprising by volume: 15-24% of a binder, 3-13% of a fiber, less than or equal to 6% of at least one lubricant, and 9-22% of one or more abrasives. US 2010/084232 A1 discloses a substantially copper-free and asbestos-free friction material for a brake comprising by volume: 12-24% of at least one binder, 2-10% of at least one fiber, less than 5% of at least one lubricant, 15-30% of at least one abrasive, and 10-24% of at least one titanate.

Even though each piece of friction material gives off only small amounts of copper, due to the sheer number of vehicles on the roads and in industrial applications using such friction materials, regulatory authorities have been looking for ways to reduce the input of copper into the environment. Therefore, it is desirable to produce a low-steel disc brake pad without the use of copper or alloys thereof, the pad having similar attributes and positive qualities as brake pads including copper-based metals and alloys.

### SUMMARY OF THE INVENTION

The present invention is directed to a friction material that is free of copper and copper alloys. The current invention discloses compositions of friction materials that contain steel fiber and other matrix strengthening materials, commonly referred to as low-steel in industry parlance. The compositions described in this invention are unique in that they provide the same level of friction, pad life, noise and other performance characteristics of a conventional pad that uses copper based materials, while employing neither of copper and copper containing materials. The compounding ingredients described herein, when mixed appropriately as described using the suggested proportions, provide a family of materials that provide outstanding friction materials that match all performance aspects of a copper containing material, without the use of copper and copper alloys.

A low-steel friction material for a brake pad and a brake-pad are provided according to claims 1 and 11. Dependent claims concern preferred embodiments.

The friction material for a brake comprises:
- a binder forming approximately 8-18 % by volume;
- a fiber forming 5-14 % by volume;
- at least one lubricant forming up to 6 % by volume;
- at least one abrasive forming 10-27 % by volume;
- at least one carbon content component forming 36-51 % by volume; and
- at least one filler forming 6-21 % by volume;
wherein the friction material is substantially free of copper.

According to an exemplary embodiment said binder comprises
a modified phenolic resin,
an unmodified phenolic resin,
a non-phenolic resin,
a mixture of a phenolic resin and a non-phenolic resin, or
a mixture of one or more straight or modified phenolic resin systems including unmodified phenolic resin, silicon modified resin, NBR modified resin, phosphorous modified resin, and boron modified resin.

According to an exemplary embodiment said fiber is chosen from a group comprising polyacrylonitrile, PAN,
cellulose fibers, and
steel fibers.

The fiber is preferably a steel fiber. The fiber is free of the aramid fiber family for environmental reasons.

Said lubricant comprises at least one of metal sulfides, organic lubricants and metal lubricants. Alternatively the lubricant comprises a metal sulfide complex. Still further the lubricant may be selected from the group comprising tin sulfides, zinc sulfide, iron sulfides, molybdenum sulfide, tin powder, and zinc powder.

The lubricant is preferably free of antimony trisulfide and antimony trioxide for environmental reasons.

According to an exemplary embodiment said abrasive is chosen from a group comprising mineral fibers,
zirconia,
zircon,
zirconium silicate,
mica,
alumina,
ceramic fibers,
calcium magnesium silicate,
calcium magnesium zirconium silicate,
calcium magnesium aluminum silicate,
magnesium aluminum silicate,
synthetic mineral fibers such as hardwool, slagwool and rockwool, silica, silicon dioxide, sand, silicon carbide, iron oxide, iron chromite and magnesium oxide.

The friction material further includes abrasives. Abrasives are typically classified by their Mohs hardness.

Carbon contents include natural graphite, synthetic graphite, petroleum coke, desulfurised petroleum coke, and carbon black.

The friction material includes fillers forming approximately 6-21 % by volume of the material. Fillers include at least one material selected from the group comprising lime, calcium oxide, calcium hydroxide, talc, calcium carbonate, calcium silicate, barites, rubber such as rubber powder or recycled rubber crumbs and various types of friction dusts.

### BRIEF DESCRIPTION OF THE DRAWINGS

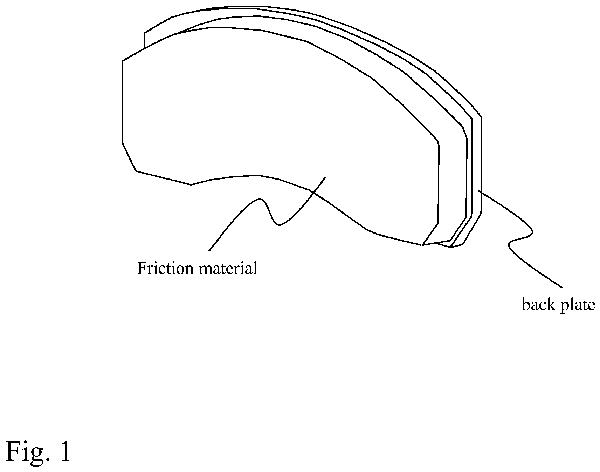

- Fig. 1: is a perspective view of an exemplary brake pad incorporating a friction material according to an embodiment of the invention.

### DETAILED DESCRIPTION OF PREFERRED EMBODIMENTS

The present invention is a new friction material for disc brake pads and other brake materials and includes a binder, a fiber, at least one lubricant, abrasives, a carbon component and optionally other materials. The brake material is substantially free of copper or alloys of copper such as brass and bronze.

The present invention is directed to a friction material and in particular, a disc brake pad for vehicles and other applications that is substantially free of copper. The friction material is a low-steel material that is formed from a binder, fibers, a lubricant, abrasives or friction modifiers and other materials.

Friction materials for disc brake pads must have consistent, reliable performance over a wide range of operating conditions. As disc brake pads for vehicles require reliable stops and long life while being subjected to extreme and harsh conditions, manufacturers have consistently tried to improve the performance of their brake pads. At the same time, due to new or expected regulations, brake pad manufacturers are attempting to remove copper and copper alloys from brake pads. While some manufacturers have been attempting to partially remove copper or copper alloys, they have not been able to successfully replace and thus remove copper completely while maintaining sufficient performance and characteristics including stopping capability, excellent high temperature resistance, minimal high temperature pad wear, minimal rotor wear and excellent pad integrity at high service temperature.

As stated above, the disc brake pad or friction material is formed from a material having binder, fibers, a lubricant, abrasives, a carbon component, and optionally other materials. The copper-free low-steel brake material is also substantially free of asbestos, antimony, brass, bronze, and copper alloys.

The friction material generally includes a binder such as phenolic resin which may be either straight or modified phenolic resin. Examples of modified binders may include silicone, acrylic, epoxy, and nitrite modified binders. The binder generally forms approximately 8-18 % by volume of the final composition. The binder is typically used to develop the matrix that holds all other ingredients together in a friction material. Many manufacturers mix various binders to improve performance characteristics. The binder system may also comprise a mixture of two types of systems, at least one of which is a phenolic type binder.

The friction material also includes steel fibers that generally form approximately 5-14 % by volume of the final friction material composition. The fibers are typically used to provide integrity and structural strength in the friction material. Many manufacturers mix various fibers and fiber lengths to improve the performance of the brake characteristics of the friction material. The fibers used are free of aramid material for environmental reasons.

The friction material also includes at least one lubricant. Lubricants are included in the friction material to reduce pad and disc wear during service. The friction material includes approximately less than or equal to 6 % by volume of the final friction material composition. The lubricant may include metal sulfides, metal lubricants or a combination thereof. Examples of metal sulfides include, but are not limited to, tin sulfides, zinc sulfide, iron sulfides, molybdenum sulfide. An example of metal lubricants includes tin and zinc powders. Various metal sulfide complexes are also available in the market, which typically include tin sulfide as one of the main ingredients. The lubricant is free of antimony trisulfide and antimony trioxide for environmental reasons.

The friction material further includes abrasives. The abrasives generally form approximately 10-27 % by volume of the final friction material composition. Abrasives are typically classified by their Mohs hardness. Examples of abrasives include alumina, magnesium oxide, zirconium silicate, silica, silicon dioxide, sand, silicon carbide, mullite, mica, iron chromite, complex mineral silicates such as calcium magnesium silicate, calcium magnesium zirconium silicate, calcium magnesium aluminum silicate, and magnesium aluminum silicate.

The hard abrasives - those with higher values on the Mohs hardness scale - are generally used in low concentrations while the mild abrasives - those with lower values on the Mohs hardness scale - are typically used in higher concentrations to achieve the same desired friction level.

Other ingredients included in the friction material generally form approximately 42-72 % of the final composition of the friction material. The other ingredients generally are used as fillers or modifiers to create specific performance characteristics. For example, the other ingredients generally provide bulk to the formulation, reduce cost, provide noise reduction and help with coating the rotor surface with a uniform transfer layer.

Examples of other ingredients are carbon contents including graphite, petroleum coke, desulfurised petroleum coke and fillers including lime, calcium oxide, calcium hydroxide, calcium silicate, barium sulphate, rubber including various powder rubbers and recycled rubber and friction dust including brown, black, straight, modified or other grades of friction dust.

The following Example 1 provides some exemplary friction materials using the present invention that have sufficient performance characteristics. The example is evaluated for the mixing, pressing, physical compression, bonding to back plate at room temperature, and costs. The composition amounts described below have been rounded off to the nearest number for sake of simplicity.

### EXAMPLE 1

| | |
|---|---|
| Fiber | 10 % |
| Lubricant | 2 % |
| Total Abrasive | 18 % |
| Carbon Content | 45 % |
| Fillers | 12 % |
| Binder | 13 % |
| Total | 100 % |

The ingredients for the mixture of Example 1 are generally prepared in a standard mixer for approximately 10 minutes and are then pressed into a press cure mould and later baked as is well-known in the art. The above friction material composition in this Example 1 was found to have good all-around characteristics for all of the above desirable characteristics. A material made using the above formulation had performance characteristics that are comparable to friction formulations that typically contain copper or copper alloys in them.

### PROPERTIES OF COPPER-FREE FRICTION MATERIAL

### Performance

The copper free friction material has comparable performance as conventional friction formulations that typically contain copper or copper alloys in them with global performance test schedule. The new material has better speed sensitivity, especially at high temperature. The compressive elastic modulus of copper free formulations is quite high (see Table 1), which is important for the function of the braking system.

**TABLE 1, Compressive E-Modulus comparison**

| | Copper-free formulation | Formulation with copper |
|---|---|---|
| Compressive E-Modulus MPa | 750-1100 | ∼590 |

### Wear

Copper free friction material has a good pad and disc wear behaviour in the temperature range from 100°C to 300°C. On vehicles in different service conditions it has the same level of pad service life as friction formulations that typically contain copper or copper alloys, meanwhile a better service life of the brake disc.

### Disc cracking

Generally a lower compressibility of a brake pad results in impaired disc cracking. The new material keeps the same level in disc cracking as friction formulations that typically contain copper or copper alloys in them, however with a lower compressibility. Lower compressibility is a positive factor for the function e.g. of an air disc brake.

## Claims

1. A low-steel friction material for a brake pad, comprising:
- a binder forming 8-18 % by volume;
- a fiber forming 5-14 % by volume;
- at least one lubricant forming up to 6 % by volume, wherein the at least one lubricant comprises at least one of metal sulfides, organic lubricants and metal lubricants or comprising a metal sulfide complex;
- at least one abrasive forming 10-27 % by volume;
- at least one carbon content component forming 36-51 % by volume, wherein the carbon content component is selected from the group comprising of natural graphite, synthetic graphite, petroleum coke, desulfurised petroleum coke, and carbon black; and
- at least one filler material forming 6-21% by volume, wherein the at least one filler material is selected from the group comprising lime, calcium oxide, calcium hydroxide, talc, calcium carbonate, calcium silicate, barites, rubber such as rubber powder or recycled rubber crumbs and various types of friction dusts;
wherein the friction material is free of copper.

2. The friction material of claim 1, wherein said binder comprises a modified phenolic resin.

3. The friction material of claim 1, wherein said binder comprises a mixture of one or more straight or modified phenolic resin systems.

4. The friction material of claim 1, wherein said binder is not a phenolic resin.

5. The friction material of claim 1, wherein said binder is a mixture of a phenolic resin and a non-phenolic resin.

6. The friction material of one of claims 1-3 and 5, wherein said binder comprises one or a mixture of one or more straight or modified phenolic resin systems including unmodified phenolic resin, silicon modified resin, NBR modified resin, phosphorous modified resin, and boron modified resin.

7. The friction material of one of the preceding claims, wherein said fiber is chosen from a group comprising polyacrylonitrile, cellulose fibers and steel fibers.

8. The friction material of claim 1, wherein said lubricant is selected from the group comprising tin sulfides, zinc sulfide, iron sulfides, molybdenum sulfide, tin powder, and zinc powder.

9. The friction material of claim 1, wherein said lubricant is free of antimony trisulfide and antimony trioxide.

10. The friction material of one of the preceding claims, wherein said abrasive is chosen from a group comprising mineral fibers, zirconia, zircon, zirconium silicate, mica, alumina, ceramic fibers, calcium magnesium silicate, calcium magnesium zirconium silicate, calcium magnesium aluminum silicate, magnesium aluminum silicate, synthetic mineral fibers such as hardwool, slagwool and rockwool, silica, silicon dioxide, sand, silicon carbide, mullite, iron oxide, iron chromite and magnesium oxide.

11. Brake pad, comprising a back plate and a friction material according to anyone of claims 1 to 10.

## Patentansprüche

1. Niedrig-Stahl Reibmaterial für einen Bremsbelag, umfassend:
- ein Bindemittel, bildend 8-18Vol.-%;
- eine Faser, bildend 5-14Vol.-%;
- mindestens einen Schmierstoff, bildend bis zu 6Vol.-%, wobei der mindestens eine Schmierstoff umfasst mindestens Eines von Metallsulfiden, organischen Schmierstoffen und metallischen Schmierstoffen oder umfassend einen Metallsulfidkomplex;
- mindestens ein Schleifmittel, bildend 10-27Vol.-%;
- mindestens eine Kohlenstoffinhaltskomponente, bildend 36-51 Vol.-%, wobei die Kohlenstoffinhaltskomponente ausgewählt ist von der Gruppe umfassend natürliches Graphit, synthetisches Graphit, Petrolkoks, entschwefeltes Petrolkoks und Ruß; und
- mindestens einen Füllstoff, bildend 6-21Vol.-%, wobei der mindestens eine Füllstoff ausgewählt ist von der Gruppe umfassend Kalk, Calciumoxid, Calciumhydroxid, Talk, Calciumcarbonat, Calciumsilicat, Bariumsulfat, Kautschuk wie z.B. Kautschukpulver oder wiederverwertete Kautschukkrümel und verschiedene Arten von Reibungsstauben;
wobei das Reibmaterial frei von Kupfer ist.

2. Reibmaterial gemäß Anspruch 1, wobei das Bindemittel ein modifiziertes Phenolharz umfasst.

3. Reibmaterial gemäß Anspruch 1, wobei das Bindemittel eine Mischung aus einem oder mehreren reinen oder modifizierten Phenolharzsystemen umfasst.

4. Reibmaterial gemäß Anspruch 1, wobei das Bindemittel kein Phenolharz ist.

5. Reibmaterial gemäß Anspruch 1, wobei das Bindemittel eine Mischung aus einem Phenolharz und einem nicht-Phenolharz ist.

6. Reibungsmaterial gemäß einem der Ansprüche 1-3 und 5, wobei das Bindemittel umfasst ein oder eine Mischung aus einem oder mehreren reinen oder modifizierten Phenolharzsystemen, beinhaltend unmodifiziertes Phenolharz, siliciummodifiziertes Harz, NBR modifiziertes Harz, phosphormodifiziertes Harz und bormodifiziertes Harz.

7. Reibmaterial gemäß einem der vorhergehenden Ansprüche, wobei die Faser aus einer Gruppe ausgewählt ist, umfassend Polyacrylnitril, Cellulosefasern und Stahlfasern.

8. Reibmaterial gemäß Anspruch 1, wobei das Schmiermittel aus der Gruppe ausgewählt ist umfassend Zinnsulfide, Zinksulfid, Eisensulfide, Molybdänsulfid, Zinnpulver und Zinkpulver.

9. Reibmaterial gemäß Anspruch 1, wobei das Schmiermittel frei von Antimontrisulfid und Antimontrioxid ist.

10. Reibmaterial gemäß einem der vorhergehenden Ansprüche, wobei das Schleifmittel aus einer Gruppe ausgewählt ist umfassend Mineralfasern, Zirconiumoxid, Zirkon, Zirconiumsilicat, Glimmer, Aluminiumoxid, Keramikfasern, Calciummagnesiumsilikat, Calciummagnesiumzirconiumsilikat, Calciummagnesiumaluminiumsilikat, Magnesiumaluminiumsilikat, synthetische Mineralfasern wie z.B. Hartwolle, Schlackenwolle und Steinwolle, Silica, Siliciumdioxid, Sand, Siliciumcarbid, Mullit, Eisenoxid, Eisenchromit und Magnesiumoxid.

11. Bremsbelag, umfassend eine Rückplatte und ein Reibmaterial gemäß einem der Ansprüche 1 bis 10.

## Revendications

1. Matière de friction à faible teneur en acier pour une garniture de frein, comprenant :
- un liant formant 8 à 18 % en volume ;
- une fibre formant 5 à 14 % en volume ;
- au moins un lubrifiant formant jusqu'à 6 % en volume, ledit au moins un lubrifiant comprenant au moins l'un parmi les sulfures métalliques, les lubrifiants organiques et les lubrifiants métalliques ou comprenant un complexe de sulfure métallique ;
- au moins un abrasif formant 10 à 27 % en volume ;
- au moins un composant à teneur en carbone formant 36 à 51 % en volume, le composant à teneur en carbone étant choisi dans le groupe comprenant le graphite naturel, le graphite synthétique, le coke de pétrole, le coke de pétrole désulfuré et le noir de carbone ; et
- au moins une matière de charge formant 6 à 21 % en volume, ladite au moins une matière de charge étant choisie dans le groupe comprenant la chaux, l'oxyde de calcium, l'hydroxyde de calcium, le talc, le carbonate de calcium, le silicate de calcium, les barytes, le caoutchouc tel que la poudre de caoutchouc ou les miettes de caoutchouc recyclé et divers types de poussières de friction ;
la matière de friction étant exempte de cuivre.

2. Matière de friction selon la revendication 1, dans laquelle ledit liant comprend une résine phénolique modifiée.

3. Matière de friction selon la revendication 1, dans laquelle ledit liant comprend un mélange d'un ou de plusieurs systèmes de résine phénolique normale ou modifiée.

4. Matière de friction selon la revendication 1, dans laquelle ledit liant n'est pas une résine phénolique.

5. Matière de friction selon la revendication 1, dans laquelle ledit liant est un mélange d'une résine phénolique et d'une résine non phénolique.

6. Matière de friction selon l'une des revendications 1 à 3 et 5, dans lequelle ledit liant comprend un ou un mélange d'un ou de plusieurs systèmes de résine phénolique normale ou modifiée comprenant une résine phénolique non modifiée, une résine modifiée par silicone, une résine modifiée par NBR, une résine modifiée par le phosphore et une résine modifiée par le bore.

7. Matière de friction selon l'une quelconque des revendications précédentes, dans laquelle ladite fibre est choisie dans un groupe comprenant le polyacrylonitrile, les fibres de cellulose et les fibres d'acier.

8. Matière de friction selon la revendication 1, dans laquelle ledit lubrifiant est choisi dans le groupe comprenant les sulfures d'étain, le sulfure de zinc, les sulfures de fer, le sulfure de molybdène, la poudre d'étain et la poudre de zinc.

9. Matière de friction selon la revendication 1, dans laquelle ledit lubrifiant est exempt de trisulfure d'antimoine et de trioxyde d'antimoine.

10. Matière de friction selon l'une quelconque des revendications précédentes, dans laquelle ledit abrasif est choisi dans un groupe comprenant les fibres minérales, la zircone, le zircon, le silicate de zirconium, le mica, l'alumine, les fibres céramiques, le silicate de calcium et de magnésium, le silicate de calcium, de magnésium et de zirconium, le silicate de calcium, de magnésium et d'aluminium, le silicate de magnésium et d'aluminium, les fibres minérales synthétiques telles que la laine dure, la laine de laitier et la laine de roche, la silice, le dioxyde de silicium, le sable, le carbure de silicium, la mullite, l'oxyde de fer, le chromite de fer et l'oxyde de magnésium.

11. Garniture de frein, comprenant une plaque de support et une matière de friction selon l'une quelconque des revendications 1 à 10.
